# EUROPÄISCHE PATENTSCHRIFT

(11) **EP 0 937 888 B1**
(45) Veröffentlichungstag und Bekanntmachung des Hinweises auf die Patenterteilung: **04.06.2003**
(21) Anmeldenummer: 99101167.7
(22) Anmeldetag: 22.01.1999
(51) Int. Cl.: F02F 3/00, F02F 3/22, B22D 19/00, F16J 1/09

(54) **Verfahren zur Herstellung eines Kolbens für Brennkraftmaschinen**
Process for making an internal combustion engine piston
Procédé pour la fabrication d'un piston pour un moteur à combustion interne

(30) Priorität: 20.02.1998 DE 19807176
(43) Veröffentlichungstag der Anmeldung: 25.08.1999
(73) Patentinhaber: Federal-Mogul Burscheid GmbH, 51399 Burscheid (DE)
(72) Erfinder: Junge, Klaus Prof., 13465 Berlin (DE)

(56) Entgegenhaltungen:
- DD-A- 279 290
- DE-A- 19 649 363
- FR-A- 1 244 722
- FR-A- 2 116 093

## Beschreibung

Die Erfindung betrifft ein Verfahren zur Herstellung eines Kolbens für Brennkraftmaschinen mit einem im Kolbenkopf, in Höhe der obersten mit einer Armierung versehenen Ringnut ringförmig umlaufenden Kühlkanal.

Bei Brennkraftmaschinen, insbesondere bei hoch belasteten Motoren, wie Dieselmotoren, ist oftmals eine Kolbenkühlung notwendig. Die Kühlung erfolgt über das Schmieröl des Motors, welches über verschiedene Bohrungen und Kanäle in den Bereich der Innenseite des Kolbenkopfes geleitet wird. Bei einteiligen Kolben ist die Herstellung der Kühlkanäle aufwendiger, als bei mehrteiligen, sogenannten gebauten Kolben.

Aus der DE 44 38 703 A1 ist ein gegossener Leichtmetallkolben für Verbrennungskraftmaschinen mit einem im Kolbenkopf angeordneten Kühlkanal bekannt. Der Kühlkanal wird dadurch gebildet, daß ein Metallrohr in den Kolbenkopf eingegossen wird.

Da die Kolbenringe der obersten Nut der höchsten Temperaturbelastung ausgesetzt sind, werden üblicherweise die Nuten mit einem Ringträger als Armierung ausgestattet. Die Armierung besteht aus einem abriebfesten Metall oder aus Gußeisen. Zudem ist man bestrebt, den Kühlkanal möglichst nahe an die oberste Nut zu plazieren, um so eine gute Kühlung zu gewährleisten. Der Nachteil von eingelegten Metallrohren resultiert zum einem daraus, daß die den Kühlkanal bildenden Rohre separat, das heißt, kostenträchtig hergestellt und in der Gußform portioniert gehalten werden müssen.

Um dieses Problem zu beseitigen wurden auch schon Kühlkanäle mit Schmelzkernen aus Salz hergestellt. Aus der DE 196 49 363 A1 ist ein Verfahren zur Herstellung eines gegossenen Kolbens zu entnehmen, bei dem in den Hohlraum der Gußform ein Salzkern eingelegt wurde. Die auf diese Weise gebildeten Kühlkanäle haben den Nachteil, daß nach dem Gießen die Schmelzkerne in einem separaten Arbeitsgang wieder entfernt werden müssen. Neben den Herstellkosten für den Schmelzkern verteuert sich hierdurch die Herstellung des Kolbens.

Der Erfindung liegt die Aufgabe zugrunde, ein Verfahren zur Herstellung von Kolben für Brennkraftmaschinen zu schaffen, bei dem die Herstellung des Kühlkanals unmittelbar radial hinter der obersten Ringnut möglich ist, wobei die Herstellungskosten gesenkt werden.

Diese Aufgabe wird erfindungsgemäß durch die kennzeichnenden Merkmale des Patentanpruchs 1 gelöst.

Vorteilhafte Weiterbildungen der Erfindung sind in den Unteransprüchen dokumentiert. Mit dem erfindungsgemäßen Verfahren ist es möglich, bei einem einteiligen Kolben den Kühlkanal direkt hinter der obersten Ringnut anzuordnen, ohne daß ein Schmelzkern verwendet wird. Da der Kühlkanal in der Gießform erzeugt wird, können beliebige Querschnittsänderungen erzeugt werden. So ist es möglich, den Querschnitt des Kühlkanals in Umfangsrichtung in definierten Teilbereichen zu verjüngen oder Querschnittssprünge anzuordnen. Es muß lediglich auf die Entformungsmöglichkeit nach dem Gießvorgang Rücksicht genommen werden.

Die Erfindung ist anhand eines Ausführungsbeispiels in der Zeichnung dargestellt und wird im folgenden näher erläutert. Es zeigen:
- Fig. 1: Teilschnitt eines Kolbenrohlings in der Gußform
- Fig. 2: erfindungsgemäßer Kolben im Querschnitt
- Fig. 3: Draufsicht gemäß Schnitt III - III der Fig. 2
- Fig. 4: Ausschnitt gemäß Fig. 2 nach dem Gußvorgang
- Fig. 5: Ansicht des Abdeckrings
- Fig. 6: Ansicht gem. Fig. 4 mit eingelegtem Abdeckring
- Fig. 7: Ansicht gem. Fig. 5 mit eingespritzter Armierung
- Fig. 8: Ansicht gemäß Fig. 6 im Fertigzustand

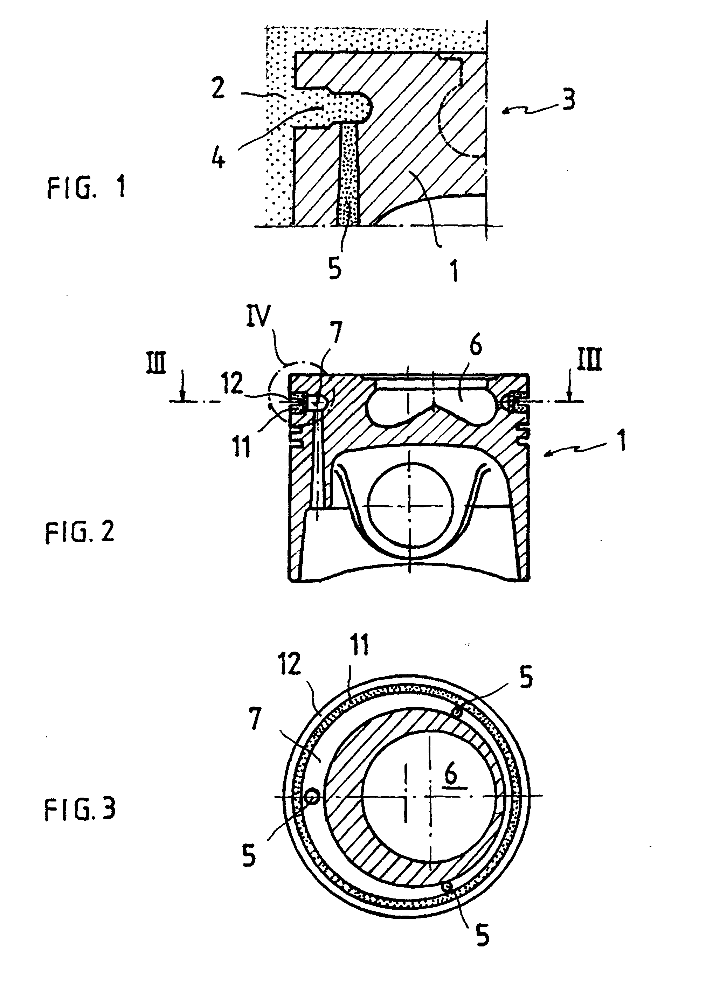

Mit Bezug auf die Fig. 2 ist ein bevorzugtes Ausführungsbeispiel eines Kolbens 1 für eine Verbrennungskraftmaschine dargestellt, hergestellt nach dem Verfahren der vorliegenden Erfindung. Der Kolben 1 ist aus einer Aluminiumlegierung hergestellt, indem, wie in der Figur 1 dargestellt, in einer Gußform 2, bestehend aus mehreren Formteilen, zunächst ein Kolbenrohling 3 gegossen wird. In den Kolbenrohling 3 wird eine Radialnut 4 erzeugt, indem die Gußform entsprechend ausgebildet ist. Für die Radialnut 4 notwendige Zu- oder Abführkanäle 5 können ebenfalls in der Gußform erzeugt werden. Das erfindungsgemäße Verfahren betrifft die Herstellung des Kühlkanals sowie die Herstellung der obersten Ringnut für einen Kolbenring (nicht dargestellt). Alle für die Funktion des Kolbens notwendigen weiteren Teile werden im folgenden nicht weiter erläutert. Bei modernen Kolben kann im Kolbenkopf eine Verbrennungsmulde 6 außen mittig angeordnet sein. Auf diese Weise ist der Brennraum radial hinter dem obersten Ring sehr eng. Mit dem erfindungsgemäßen Verfahren kann, wie in der Fig. 3 ersichtlich, ein Kühlkanal mit verschiedenen Querschnitten gebildet werden, ohne daß zusätzliche Herstellkosten anfallen.

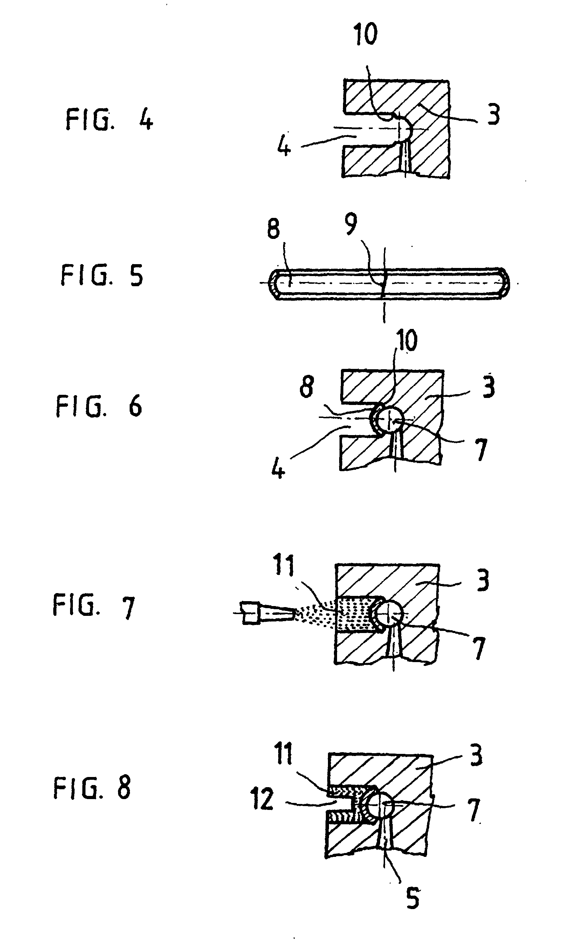

Die Figuren 4 bis 8 verdeutlichen den Herstellungsprozeß. Nach dem Gießvorgang weist der Kolbenrohling 3 eine umlaufende, nach außen offene Radialnut 4 auf. Diese kann eine beliebige Querschnittsform aufweisen und sich auch exzentrisch zur Kolbenachse erstrecken. In der Figur 5 ist ein Abdeckring 8 aus Metall dargestellt. Der Abdeckring kann durch Rundbiegen eines profilierten Metallstranges erzeugt werden. Es können verschiedene Profile verwendet werden. Der Abdeckring ist so dimensioniert, daß er im eingebauten Zustand einen geschlossenen Stoß 9 aufweist. Die Radialnut 4 ist in radialer Richtung verjüngt ausgebildet, so daß ein Anschlag 10 für den Abdeckring 8 erzeugt wird. Die Figur 6 zeigt den eingelegten Abdeckring 10 in der Radialnut 4. Auf diese Weise wird ein Teil der Radialnut verschlossen und bildet so den Kühlkanal 7. Als nächstes wird durch thermisches Spritzen Armierungs-Werkstoff 11 in die Radialnut eingespritzt, so daß die Radialnut vollständig aufgefüllt ist. Schließlich wird in den Armierungswerkstoff 11 die zur Aufnahme des Kolbenrings notwendige Ringnut 12 mechanisch eingebracht.

Der auf diese Weise hergestellte Kolben 1 zeichnet sich durch besonders günstige Wärmeleitfähigkeit im Bereich der obersten Ringnut 12 aus, da der Kühlkanal 7 unmittelbar hinter der Ringnut 12 verläuft. Durch den Verzicht auf kostenträchtige Hilfsmittel, wie eingelegte Metallrohre oder Schmelzkerne, ist die Herstellung des Kolbens deutlich günstiger als bisher

## Patentansprüche

1. Verfahren zur Herstellung eines Kolbens für Brennkraftmaschinen mit einem im Kolbenkopf, in Höhe der obersten, mit einer Armierung versehenen Ringnut, ringförmig umlaufenden Kühlkanal, wobei zunächst ein Kolbenrohling (3) im Gußverfahren hergestellt wird, welcher eine umlaufende nach außen offene Radialnut (4) aufweist, die zur Bildung der Ringnut (12) als auch des Kühlkanals (7) dient, daß in die Radialnut (4) ein Abdeckring (8) so eingelegt wird, daß die Radialnut (4) nach innen abgedeckt und der Kühlkanal (7) gebildet ist und anschließend die Radialnut (4) durch thermisches Spritzen von Armierungs- Werkstoff (11) aufgefüllt und schließlich in den eingespritzten Armierungs-Werkstoff (11) die Ringnut (12) mechanisch eingebracht wird, **dadurch gekennzeichnet dass** der Abdeckring (8) radial innenspannend ist.

2. Verfahren nach Anspruch 1, **dadurch gekennzeichnet, daß** die Radialnut (4) mit einem nach innen sich verjüngenden Querschnitt ausgebildet wird.

3. Verfahren nach Anspruch 1 und 2, **dadurch gekennzeichnet, daß** die Radialnut (4) exzentrisch zur Kolbenachse ausgebildet wird.

4. Verfahren nach den Ansprüchen 1 bis 3, **dadurch gekennzeichnet, daß** der Armierungs-Werkstoff(11) aus Metall-, Metallegierungen oder Metallkeramiken besteht.

5. Verfahren nach den Ansprüchen 1 bis 4, **dadurch gekennzeichnet, daß** der Armierungs-Werkstoff(11) aus einer Nickellegierung besteht.

6. Verfahren nach den Ansprüchen 1 bis 5, **dadurch gekennzeichnet, daß** die Armierung im Laserspritzverfahren hergestellt wird.

7. Verfahren nach den Ansprüchen 1 bis 6, **dadurch gekennzeichnet, daß** die Radialnut (4) schichtweise mit verschiedenen Metallen gefüllt wird, wobei die Übergänge der Schichten gradiert ausgebildet sind.

8. Verfahren nach den Ansprüchen 1 bis 7, **dadurch gekennzeichnet, daß** der Abdeckring (8) aus Metall besteht.

9. Verfahren nach denAnsprüchen 1 bis 8, **dadurch gekennzeichnet, daß** als Kolbenmaterial eine Al-Legierung verwendet wird.

10. Kolben für Brennkraftmaschinen mit einem im Kolbenkopf in Höhe der mit einer Armierung versehenen obersten Ringnut ausgebildeten ringförmig, umlaufenden Kühlkanal, hergestellt nach den Ansprüchen 1 bis 9, **dadurch gekennzeichnet, daß** die Armierung aus einer thermischen Spritzschicht besteht und auf einen den Kühlkanal (7) radial nach außen begrenzenden metallischen Abdeckring (8) aufgetragen ist.

## Revendications

1. Procédé pour fabriquer un piston de machine à combustion interne comprenant un canal de refroidissement s'étendant de manière annulaire dans la tête de piston à la hauteur de la rainure annulaire la plus haute pourvue d'un renforcement, dans lequel on fabrique d'abord une ébauche de piston (3) par un procédé de fonte, ladite ébauche comprenant une rainure radiale périphérique (4) ouverte vers l'extérieur, qui sert à la formation de la rainure annulaire (12) ainsi que du canal de refroidissement (7), un anneau de recouvrement (8) étant inséré dans la rainure radiale (4), de telle sorte que la rainure radiale (4) est recouverte vers l'intérieur et que le canal de refroidissement (7) est formé et ensuite la rainure radiale (4) est remplie de matériau de renforcement (11) par injection thermique et enfin la rainure annulaire (12) est insérée mécaniquement dans le matériau de renforcement injecté (11), **caractérisé en ce que** l'anneau de recouvrement (8) est sous tension radiale interne.

2. Procédé selon la revendication 1, **caractérisé en ce que** la rainure radiale (4) est réalisée avec une section transversale qui diminue vers l'intérieur.

3. Procédé selon la revendication 1 ou 2, **caractérisé en ce que** la rainure radiale (4) est réalisée de manière excentrée par rapport à l'axe du piston.

4. Procédé selon l'une des revendications 1 à 3, **caractérisé en ce que** le matériau de renforcement (11) est constitué par du métal, des alliages de métaux ou des céramiques métalliques.

5. Procédé selon l'une des revendications 1 à 4, **caractérisé en ce que** le matériau de renforcement (11) est constitué par un alliage de nickel.

6. Procédé selon l'une des revendications 1 à 5, **caractérisé en ce que** le renforcement est réalisé par un procédé d'injection au laser.

7. Procédé selon l'une des revendications 1 à 6, **caractérisé en ce que** la rainure radiale (4) est remplie couche après couche avec des métaux différents, les zones de transition des couches étant réalisées de manière graduelle.

8. Procédé selon l'une des revendications 1 à 7, **caractérisé en ce que** l'anneau de recouvrement (8) est réalisé en métal.

9. Procédé selon l'une des revendications 1 à 8, **caractérisé en ce qu'**un alliage d'aluminium est utilisé en tant que matériau de piston.

10. Piston pour une machine à combustion interne pourvu d'un canal de refroidissement entourant la tête de piston et réalisé de manière annulaire à la hauteur de la rainure annulaire la plus haute pourvue d'un renforcement, ledit piston étant fabriqué selon l'une des revendications 1 à 9, **caractérisé en ce que** le renforcement consiste en une couche d'injection thermique et est appliqué sur un anneau de recouvrement métallique (8) qui délimite radialement vers l'extérieur le canal de refroidissement (7).

## Claims

1. Method of producing a piston for internal combustion engines which has an annular circumferential cooling channel in the piston head at the height of the uppermost annular groove provided with reinforcement, wherein initially a piston blank (3) is produced by casting and has a circumferential radial groove (4) which is open towards the outside and which serves to form the annular groove (12) and also the cooling channel (7), a cover ring (8) being so inserted into the radial groove (4) that the radial groove (4) is covered towards the inside and the cooling channel (7) is formed and then the radial groove (4) is filled by thermal spraying of reinforcing material (11) and finally the annular groove (12) is introduced mechanically into the sprayed-in reinforcing material (11), **characterised in that** the cover ring (8) is inwardly clamping.

2. Method according to claim 1, **characterised in that** the radial groove (4) is designed with a cross-section which tapers towards the inside.

3. Method according to claim 1 and 2, **characterised in that** the radial groove (4) is configured eccentric with respect to the piston axis.

4. Method according to claims 1 to 3, **characterised in that** the reinforcing material (11) consists of metal, metal alloys or metal ceramics.

5. Method according to claims 1 to 4, **characterised in that** the reinforcing material (11) consists of a nickel alloy.

6. Method according to claims 1 to 5, **characterised in that** the reinforcement is produced by a laser spraying method.

7. Method according to claims 1 to 6, **characterised in that** the radial groove (4) is filled in layers with various metals, the transitions between the layers being formed graduated.

8. Method according to claims 1 to 7, **characterised in that** the cover ring (8) consists of metal.

9. Method according to claims 1 to 8, **characterised in that** an aluminium alloy is used as the piston material.

10. Piston for internal combustion engines which has an annular circumferential cooling channel in the piston head at the height of the uppermost annular groove provided with reinforcement, produced according to claims 1 to 9, **characterised in that** the reinforcement consists of a thermal spray coating and is applied to a metal cover ring (8) which delimits the cooling channel (7) radially towards the outside.
